# EUROPEAN PATENT APPLICATION

(11) **EP 2 933 582 A1**
(43) Date of publication of application: **21.10.2015**
(21) Application number: 12890082.6
(22) Date of filing: 12.12.2012
(51) Int. Cl.: F25B 1/00, F24F 5/00

(54) **AIR CONDITIONER DEVICE**

(71) Applicant: Mitsubishi Electric Corporation, Tokyo 100-8310 (JP)
(72) Inventor: HONDA, Takayoshi, Tokyo 100-8310 (JP); MOTOMURA, Yuji, Tokyo 100-8310 (JP); SHIMAMOTO, Daisuke, Tokyo 100-8310 (JP); MORIMOTO, Osamu, Tokyo 100-8310 (JP)
(74) Representative: Pfenning, Meinig & Partner GbR
(86) International application number: PCT/JP2012/082128
(87) International publication number: WO 2014/091572

(57) **Abstract**

All of pumps 21 are in operation for a predetermined period of time in an air-conditioning apparatus 100 and, after that, the number of pumps 21 in operation is changed depending on an operation capacity for indoor units 2 each including a use side heat exchanger 26.

## Description

### Technical Field

The present invention relates to an air-conditioning apparatus which is used as, for example, a multi-air-conditioning apparatus for a building.

### Background Art

There have been air-conditioning apparatuses configured such that refrigerant is circulated between an outdoor unit, serving as a heat source unit, disposed outside, for example, a structure and an indoor unit disposed in an indoor space in the structure in order to convey cooling energy or heating energy to an air-conditioned space, such as an indoor space, and perform a cooling operation or a heating operation. Such air-conditioning apparatuses are used as, for example, building multi-air-conditioning apparatuses. As regards the refrigerant used in those air-conditioning apparatuses, for example, HFC refrigerant (e.g., R410A, R404A, R407C, and R134a) are often used. In addition, natural refrigerant, such as carbon dioxide (CO₂), have also recently been used.

There have been other air-conditioning apparatuses typified by a chiller system. Such an air-conditioning apparatus is configured such that cooling energy or heating energy is produced in a heat source unit disposed in an outdoor space, the cooling energy or heating energy is transferred to a heat medium, such as water or antifreeze, in a heat exchanger disposed in an outdoor unit, and the heat medium is conveyed through a heat medium circuit to a fan coil unit or a panel heater, serving as an indoor unit, disposed in an air-conditioned space in order to perform the cooling operation or the heating operation (refer to Patent Literature 1, for example).

Such related-art air-conditioning apparatuses include an air-conditioning apparatus configured such that refrigerant is circulated through an indoor unit. In this air-conditioning apparatus, if the refrigerant leaks into an indoor space where people stay, a user may be affected by the leaked refrigerant. An air-conditioning apparatus that conditions air by exchanging heat between refrigerant and a heat medium, such as water or brine, and allowing the heat medium after heat exchange to flow through an indoor unit has been proposed to solve the above-described problem (refer to Patent Literature 2, for example).

### Citation List

### Patent Literature

Patent Literature 1: Japanese Unexamined Patent Application Publication No. 2003-343936 (Page 5, Fig. 1, for example)
Patent Literature 2: Japanese Unexamined Patent Application Publication No. 2010-084951 (Pages 5 and 6, Fig. 1, for example)

### Summary of Invention

### Technical Problem

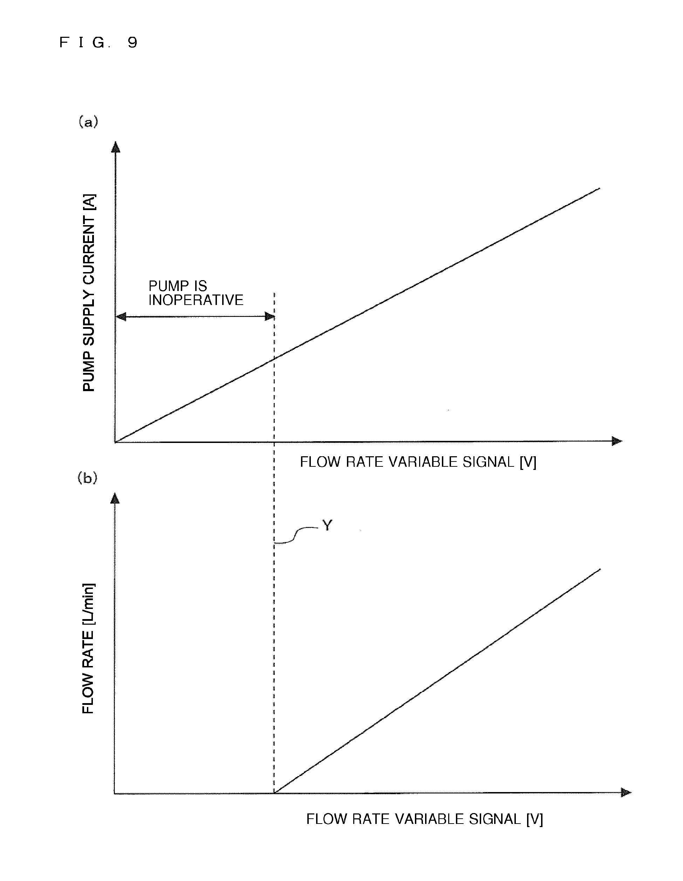

As described above, an air-conditioning apparatus configured such that a heat medium, serving as a secondary refrigerant, flows through an indoor unit typically uses a pump to circulate the heat medium. The pump is typically inoperative at or below a certain current (refer to Fig. 9). Fig. 9 includes graphs illustrating the relationship between the flow rate of a heat medium and an input voltage to the pump disposed in the air-conditioning apparatus configured such that the heat medium, serving as a secondary refrigerant, flows through the indoor unit. Fig. 9(a) is a graph illustrating the relationship between an input current [A] and a flow rate variable signal [V]. Fig. 9(b) is a graph illustrating the relationship between the heat medium flow rate [L/min] and the flow rate variable signal [V]. Fig. 9 demonstrates that the pump is inoperative at or below a current indicated by a broken line Y.

Such an air-conditioning apparatus, therefore, performs control to force the flow rate to be reduced by using a valve whose opening degree can be controlled. Disadvantageously, power consumption of the related-art air-conditioning apparatus during an operation with a reduced heat medium flow rate is high relative to the heat medium flow rate. In other words, this operation exhibits low efficiency.

The present invention has been made to solve the above-described disadvantage and provides an air-conditioning apparatus that controls pumps depending on an operation mode of each indoor unit.

### Solution to Problem

The present invention provides an air-conditioning apparatus including at least one intermediate heat exchanger that exchanges heat between heat source side refrigerant and a heat medium different from the heat source side refrigerant, a refrigeration cycle including a compressor, a heat source side heat exchanger, at least one expansion valve, and a refrigerant passage of the intermediate heat exchanger connected by pipes through which the heat source side refrigerant flows, and a heat medium circuit including a heat medium passage of the intermediate heat exchanger, a plurality of pumps, and a plurality of use side heat exchangers connected by pipes through which the heat medium flows. All of the pumps are in operation for a predetermined period of time and, after that, the number of pumps in operation is changed depending on an operation capacity for indoor units each including the use side heat exchanger. Advantageous Effects of Invention

The air-conditioning apparatus according to the present invention controls the pumps depending on an operation mode of each indoor unit. Advantageously, an operation can be performed with pump power consumption depending on the flow rate of the heat medium. Thus, the efficiency of operation can be further increased.

### Brief Description of Drawings

[Fig. 1] Fig. 1 is an overall configuration diagram illustrating an exemplary installation state of an air-conditioning apparatus according to Embodiment of the present invention.
[Fig. 2] Fig. 2 is an overall configuration diagram illustrating an exemplary installation state of the air-conditioning apparatus according to Embodiment of the present invention.
[Fig. 3] Fig. 3 is a schematic circuit diagram illustrating an exemplary circuit configuration of the air-conditioning apparatus according to Embodiment of the present invention.
[Fig. 4] Fig. 4 is a refrigerant circuit diagram illustrating flows of refrigerant in a cooling only operation mode of the air-conditioning apparatus according to Embodiment of the present invention.
[Fig. 5] Fig. 5 is a refrigerant circuit diagram illustrating flows of the refrigerant in a heating only operation mode of the air-conditioning apparatus according to Embodiment of the present invention.
[Fig. 6] Fig. 6 is a refrigerant circuit diagram illustrating flows of the refrigerant in a cooling main operation mode of the air-conditioning apparatus according to Embodiment of the present invention.
[Fig. 7] Fig. 7 is a refrigerant circuit diagram illustrating flows of the refrigerant in a heating main operation mode of the air-conditioning apparatus according to Embodiment of the present invention.
[Fig. 8] Fig. 8 is a flowchart illustrating an exemplary control process for changing the number of pumps operated in the air-conditioning apparatus according to Embodiment of the present invention.
[Fig. 9] Fig. 9 includes graphs illustrating the relationship between the flow rate of a heat medium and an input voltage to a pump disposed in an air-conditioning apparatus in which the heat medium, serving as a secondary refrigerant, flows through an indoor unit.

### Description of Embodiments

Embodiment of the present invention will be described below with reference to the drawings.

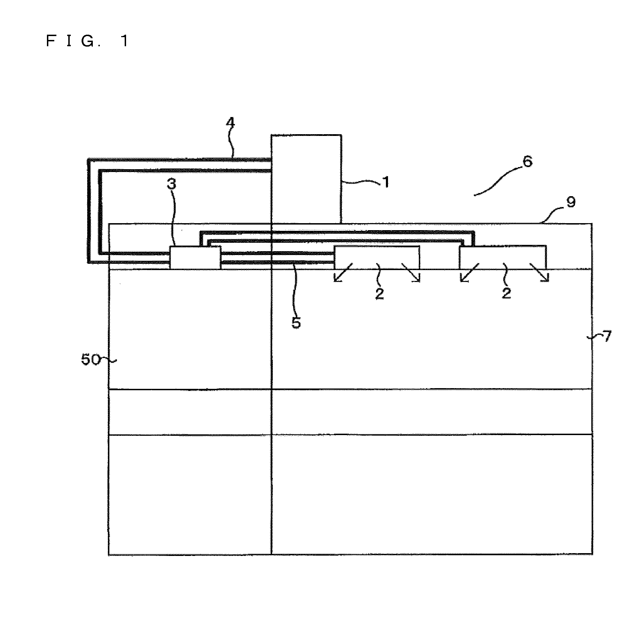

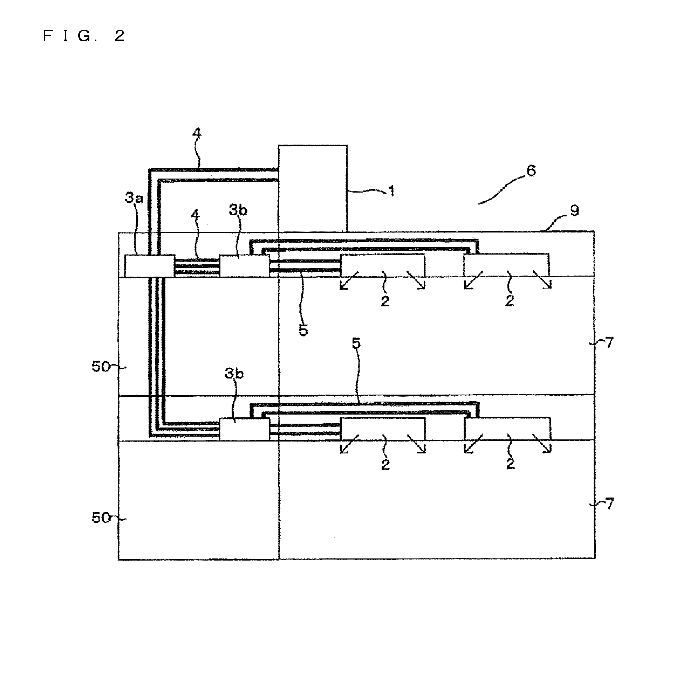

Figs. 1 and 2 are overall configuration diagrams each illustrating an exemplary installation state of an air-conditioning apparatus according to Embodiment of the present invention. Examples of installation of the air-conditioning apparatus according to Embodiment will be described with reference to Figs. 1 and 2. This air-conditioning apparatus includes a refrigeration cycle (a refrigerant circuit and a heat medium circuit), through which refrigerants (heat source side refrigerant and a heat medium, such as water or antifreeze) are circulated, to perform a cooling operation or a heating operation. Note that the dimensional relationship among components in Fig. 1 and the following figures may be different from the actual one.

In Fig. 1, the air-conditioning apparatus according to Embodiment includes a single heat source unit 1, serving as a heat source device, a plurality of indoor units 2, and a relay unit 3 interposed between the heat source unit 1 and the indoor units 2. The relay unit 3 exchanges heat between the heat source side refrigerant and the heat medium. The heat source unit 1 is connected to the relay unit 3 by refrigerant pipes 4 through which the heat source side refrigerant is conveyed. The relay unit 3 is connected to each indoor unit 2 by pipes (heat medium pipes) 5 through which the heat medium is conveyed. Cooling energy or heating energy produced in the heat source unit 1 is delivered to the indoor units 2 via the relay unit 3. The number of heat source units 1 connected, the number of indoor units 2 connected, and the number of relay units 3 connected are not limited to the numbers illustrated in Fig. 1.

In Fig. 2, the air-conditioning apparatus according to Embodiment includes a single heat source unit 1, serving as a heat source device, a plurality of indoor units 2, and a plurality of separated relay units 3 (a first relay unit 3a and second relay units 3b) interposed between the heat source unit 1 and the indoor units 2. The heat source unit 1 is connected to the first relay unit 3a by the refrigerant pipes 4. The first relay unit 3a is connected to the second relay units 3b by the refrigerant pipes 4. Each of the second relay units 3b is connected to each indoor unit 2 by the pipes 5. Cooling energy or heating energy produced in the heat source unit 1 is delivered to the indoor units 2 via the first relay unit 3a and the second relay units 3b. The number of heat source units 1 connected, the number of indoor units 2 connected, and the number of relay units 3 connected are not limited to the numbers illustrated in Fig. 2.

The heat source unit 1 is typically disposed in an outdoor space 6 that is a space (e.g., a roof) outside a structure 9, such as a building, and supplies cooling energy or heating energy to the indoor units 2 via the relay unit 3. Each indoor unit 2 is disposed in a living space 7 that is a space (e.g., a living room or a server room) inside the structure 9 to which cooling air or heating air can be conveyed, and supplies the cooling air or the heating air to the living space 7, serving as an air-conditioned area. The relay unit 3 includes a housing separate from housings of the heat source unit 1 and the indoor units 2 so that the relay unit 3 can be disposed in a different position (hereinafter, referred to as a "non-living space 50") from those of the outdoor space 6 and the living space 7. The relay unit 3 connects the heat source unit 1 and the indoor units 2 to transfer cooling energy or heating energy, supplied from the heat source unit 1, to the indoor units 2.

The outdoor space 6 is assumed to be a place outside the structure 9, for example, a roof as illustrated in Figs. 1 and 2. The non-living space 50 is assumed to be a place that is inside the structure 9 but is different from the living space 7, for example, a place (e.g., a space above a corridor) in which people do not stay at all times, a space above a ceiling of a common zone, a common space in which an elevator or the like is installed, a machine room, a computer room, or a stockroom. The living space 7 is assumed to be a place that is inside the structure 9 and in which people stay at all times, or many or a few people temporarily stay, for example, an office, a classroom, a conference room, a dining hall, or a server room.

Referring to Figs. 1 and 2, the heat source unit 1 and the relay unit 3 are connected using two refrigerant pipes 4. The relay unit 3 and each indoor unit 2 are connected using two pipes 5. Connecting the heat source unit 1 to the relay unit 3 using the two refrigerant pipes 4 and connecting each indoor unit 2 to the relay unit 3 using the two pipes 5 in this manner facilitate construction of the air-conditioning apparatus according to Embodiment.

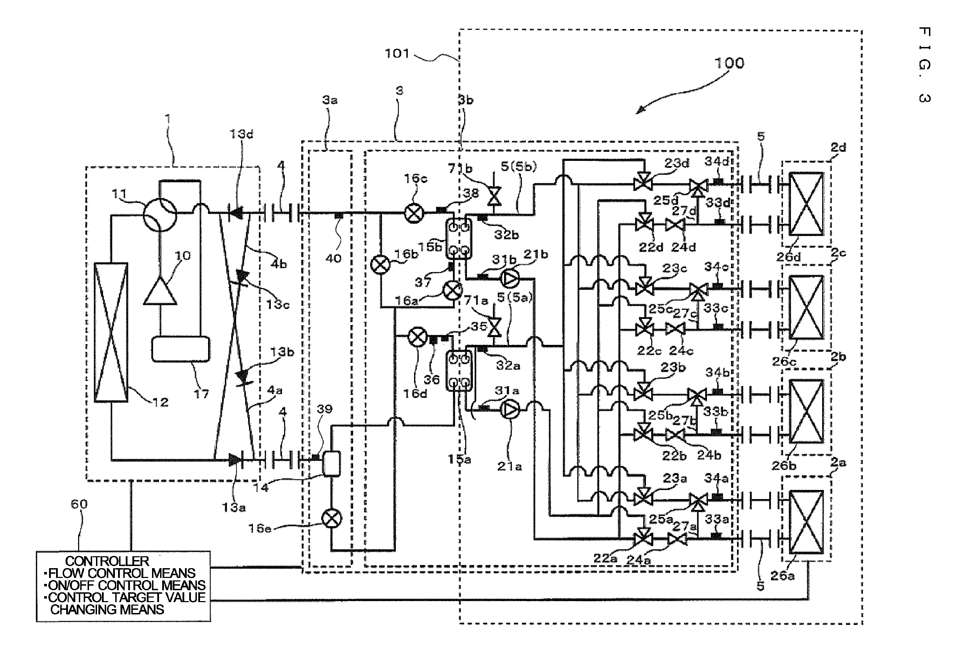

As illustrated in Fig. 2, the relay unit 3 may be separated into a single first relay unit 3a and two second relay units 3b derived from the first relay unit 3a. This configuration enables a plurality of second relay units 3b to be connected to the single first relay unit 3a. In this configuration, the first relay unit 3a is connected to each second relay unit 3b by three refrigerant pipes 4. Such a circuit will be described in detail later (refer to Fig. 3).

Although Figs. 1 and 2 illustrate the indoor units 2 of a ceiling cassette type, the indoor units are not limited to this type and may be of any type capable of sending heating air or cooling air to the living space 7 directly or through a duct or the like, for example, a ceiling concealed type or a ceiling suspended type.

Although Figs. 1 and 2 illustrate the heat source unit 1 disposed in the outdoor space 6, the arrangement is not limited to this illustration. For example, the heat source unit 1 may be disposed in an enclosed space, for example, a machine room with a ventilation opening. The heat source unit 1 may be disposed inside the structure 9 as long as waste heat can be exhausted through an exhaust duct to the outside of the structure 9. Alternatively, if the heat source unit 1 of a water-cooled type is used, the heat source unit 1 may be disposed inside the structure 9. Even when the heat source unit 1 is disposed in such a place, no problem in particular will occur.

The relay unit 3 can be disposed near the heat source unit 1. If the distance between the relay unit 3 and each indoor unit 2 is too long, conveyance power for the heat medium would be significantly large. Note that the effect of energy saving is reduced in this case. As described above, the number of heat source units 1 connected, the number of indoor units 2 connected, and the number of relay units 3 connected are not limited to the numbers illustrated in Figs. 1 and 2. The numbers may be determined depending on, for example, the structure 9 where the air-conditioning apparatus according to Embodiment is installed.

Fig. 3 is a schematic circuit diagram illustrating an exemplary circuit configuration of the air-conditioning apparatus (hereinafter, referred to as the "air-conditioning apparatus 100") according to Embodiment of the present invention. The configuration of the air-conditioning apparatus 100 will now be described in detail with reference to Fig. 3. Referring to Fig. 3, the heat source unit 1 and the relay unit 3 are connected by the refrigerant pipes 4 through a first intermediate heat exchanger 15a and a second intermediate heat exchanger 15b which are arranged in the second relay unit 3b. The second relay unit 3b and each indoor unit 2 are connected by the pipes 5 through the first intermediate heat exchanger 15a and the second intermediate heat exchanger 15b.

### [Configuration of Air-conditioning Apparatus 100]

The configurations and functions of components included in the air-conditioning apparatus 100 will now be described. Fig. 3 and the following figures illustrate a case where the relay unit 3 is separated into the first relay unit 3a and the second relay unit 3b. The refrigerant pipes 4 and the pipes 5 will be described in detail later.

### (Heat Source Unit 1)

The heat source unit 1 includes a compressor 10, a four-way valve 11, a heat source side heat exchanger (outdoor heat exchanger) 12, and an accumulator 17 which are connected in series by the refrigerant pipes 4. The heat source unit 1 further includes a first connecting pipe 4a, a second connecting pipe 4b, a check valve 13a, a check valve 13b, a check valve 13c, and a check valve 13d. The arrangement of the first connecting pipe 4a, the second connecting pipe 4b, and the check valves 13a, 13b, 13c, and 13d enables the heat source side refrigerant, allowed to flow into the relay unit 3, to flow in a constant direction irrespective of an operation requested by any indoor unit 2.

The compressor 10 sucks the heat source side refrigerant and compresses the heat source side refrigerant into a high-temperature high-pressure state and may be, for example, a capacity-controllable inverter compressor.

The four-way valve 11 switches between a flow direction of the heat source side refrigerant in the heating operation and a flow direction of the heat source side refrigerant in the cooling operation.

The heat source side heat exchanger 12 functions as an evaporator in the heating operation or functions as a condenser in the cooling operation to exchange heat between the heat source side refrigerant and air supplied from an air-sending device (not illustrated), such as a fan, so that the heat source side refrigerant evaporates and gasifies or condenses and liquefies.

The accumulator 17, which is disposed on a suction side of the compressor 10, stores an excess of refrigerant.

The check valve 13d, which is disposed to the refrigerant pipe 4 located between the relay unit 3 and the four-way valve 11, permits the heat source side refrigerant to flow only in a predetermined direction (the direction from the relay unit 3 to the heat source unit 1).

The check valve 13a, which is disposed to the refrigerant pipe 4 located between the heat source side heat exchanger 12 and the relay unit 3, permits the heat source side refrigerant to flow only in a predetermined direction (the direction from the heat source unit 1 to the relay unit 3).

The check valve 13b, which is disposed to the first connecting pipe 4a, permits the heat source side refrigerant to flow only in a direction from a point downstream of the check valve 13d to a point downstream of the check valve 13a.

The check valve 13c, which is disposed to the second connecting pipe 4b, permits the heat source side refrigerant to flow only in a direction from a point upstream of the check valve 13d to a point upstream of the check valve 13a.

The first connecting pipe 4a connects the refrigerant pipe 4 downstream of the check valve 13d and the refrigerant pipe 4 downstream of the check valve 13a in the heat source unit 1.

The second connecting pipe 4b connects the refrigerant pipe 4 upstream of the check valve 13d and the refrigerant pipe 4 upstream of the check valve 13a in the heat source unit 1.

Although Fig. 2 illustrates a case where the first connecting pipe 4a, the second connecting pipe 4b, and the check valves 13a, 13b, 13c, and 13d are arranged, the configuration is not limited to the case. The air-conditioning apparatus 100 does not necessarily have to include those components.

### (Indoor Units 2)

The indoor units 2 each include a use side heat exchanger 26. The use side heat exchanger 26 is connected to a stop valve 24 and a flow control valve 25 arranged in the second relay unit 3b by the pipes 5. The use side heat exchanger 26 exchanges heat between the heat medium and air supplied from an air-sending device (not illustrated), such as a fan, to produce heating air or cooling air to be supplied to the air-conditioned area.

Fig. 3 illustrates a case where four indoor units 2 are connected to the second relay unit 3b. An indoor unit 2a, an indoor unit 2b, an indoor unit 2c, and an indoor unit 2d are illustrated in that order from the bottom in Fig. 3. In addition, the use side heat exchangers 26 are illustrated as a use side heat exchanger 26a, a use side heat exchanger 26b, a use side heat exchanger 26c, and a use side heat exchanger 26d in that order from the bottom in Fig. 3 so as to correspond to the indoor units 2a to 2d, respectively. The number of indoor units 2 connected is not limited to four, as illustrated in Fig. 3, as in the case of Fig. 1.

### (Relay Unit 3)

The relay unit 3 is composed of the first relay unit 3a and the second relay unit 3b which include separate housings. As described above, this configuration enables a plurality of second relay units 3b to be connected to the single first relay unit 3a. The first relay unit 3a includes a gas-liquid separator 14 and an expansion valve 16e. The second relay unit 3b includes the two intermediate heat exchangers 15, four expansion valves 16, two pumps 21, four flow switching valves 22, four flow switching valves 23, the four stop valves 24, and the four flow control valves 25.

The gas-liquid separator 14 is connected to one refrigerant pipe 4 connecting to the heat source unit 1 and two refrigerant pipes 4 connecting to the first and second intermediate heat exchangers 15a and 15b in the second relay unit 3b. The gas-liquid separator 14 separates the heat source side refrigerant supplied from the heat source unit 1 into vapor refrigerant and liquid refrigerant.

The expansion valve 16e, which is disposed between the gas-liquid separator 14 and the refrigerant pipe 4 connecting an expansion valve 16a and an expansion valve 16b, functions as a pressure reducing valve or an expansion device to depressurize the heat source side refrigerant such that the refrigerant is expanded. The expansion valve 16e may be a component having a variably controllable opening degree, for example, an electronic expansion valve.

The first relay unit 3a includes a pressure sensor 39 and a pressure sensor 40.

The pressure sensor 39, which is disposed to the refrigerant pipe 4 connecting to a heat source side refrigerant inlet of the gas-liquid separator 14, detects a pressure of the heat source side refrigerant flowing from the heat source unit 1 into the first relay unit 3a. More specifically, the pressure sensor 39 detects the pressure of the heat source side refrigerant flowing into the gas-liquid separator 14.

The pressure sensor 40, which is disposed to the refrigerant pipe 4 connecting the expansion valve 16b, an expansion valve 16c, and the first relay unit 3a, detects the pressure of the heat source side refrigerant leaving the second relay unit 3b. More specifically, the pressure sensor 40 detects the pressure of the heat source side refrigerant flowing into the heat source unit 1.

The two intermediate heat exchangers 15 (the first intermediate heat exchanger 15a and the second intermediate heat exchanger 15b) each function as a condenser or an evaporator, exchange heat between the heat source side refrigerant and the heat medium, and supply cooling energy or heating energy produced by the heat source unit 1 to the indoor units 2. The first intermediate heat exchanger 15a is disposed between the gas-liquid separator 14 and an expansion valve 16d in the flow direction of the heat source side refrigerant and is used to heat the heat medium. The second intermediate heat exchanger 15b is disposed between the expansion valves 16a and 16c in the flow direction of the heat source side refrigerant and is used to cool the heat medium.

The four expansion valves 16 (the expansion valves 16a to 16d) each function as a pressure reducing valve or an expansion device to depressurize the heat source side refrigerant such that the refrigerant is expanded. The expansion valve 16a is disposed between the expansion valve 16e and the second intermediate heat exchanger 15b in a state where the heat source side refrigerant flows through the expansion valve 16e. The expansion valve 16b is disposed parallel to the expansion valve 16a. The expansion valve 16c is disposed between the second intermediate heat exchanger 15b and the first relay unit 3a. The expansion valve 16d is disposed between the first intermediate heat exchanger 15a and the expansion valves 16a and 16b. Each of the four expansion valves 16 may be a component having a variably controllable opening degree, for example, an electronic expansion valve.

The two pumps 21 (a pump 21 a and a pump 21 b) each allow the heat medium flowing through the pipe 5 to be circulated. The pump (first pump) 21 a is disposed to the pipe 5 located between the first intermediate heat exchanger 15a and the flow switching valves 22. The pump (second pump) 21 b is disposed to the pipe 5 located between the second intermediate heat exchanger 15b and the flow switching valves 22. Each of the pumps 21 a and 21 b may be of any type, for example, a capacity-controllable pump.

Each of the four flow switching valves 22 (flow switching valves 22a to 22d) is a three-way valve and switches between passages for the heat medium. The flow switching valves 22 equal in number to the (four in this case) indoor units 2 installed are arranged. Each flow switching valve 22 is disposed on an inlet side of a heat medium passage of the corresponding use side heat exchanger 26 such that one of three ways is connected to the first intermediate heat exchanger 15a, another one of the three ways is connected to the second intermediate heat exchanger 15b, and the other one of the three ways is connected to the stop valve 24. The flow switching valve 22a, the flow switching valve 22b, the flow switching valve 22c, and the flow switching valve 22d are illustrated in that order from the bottom in Fig. 3 so as to correspond to the respective indoor units 2.

Each of the four flow switching valves 23 (flow switching valves 23a to 23d) is a three-way valve and switches between passages for the heat medium. The flow switching valves 23 equal in number to the (four in this case) indoor units 2 installed are arranged. Each flow switching valve 23 is disposed on an outlet side of the heat medium passage of the corresponding use side heat exchanger 26 such that one of three ways is connected to the first intermediate heat exchanger 15a, another one of the three ways is connected to the second intermediate heat exchanger 15b, and the other one of the three ways is connected to the flow control valve 25. The flow switching valve 23a, the flow switching valve 23b, the flow switching valve 23c, and the flow switching valve 23d are illustrated in that order from the bottom in Fig. 3 so as to correspond to the respective indoor units 2.

Each of the four stop valves 24 (stop valves 24a to 24d) is a two-way valve and opens or closes the pipe 5. The stop valves 24 equal in number to the (four in this case) indoor units 2 installed are arranged. Each stop valve 24 is disposed on the inlet side of the heat medium passage of the corresponding use side heat exchanger 26 such that one of two ways is connected to the use side heat exchanger 26 and the other one of the two ways is connected to the flow switching valve 22. The stop valve 24a, the stop valve 24b, the stop valve 24c, and the stop valve 24d are illustrated in that order from the bottom in Fig. 3 so as to correspond to the respective indoor units 2.

Each of the four flow control valves 25 (flow control valves 25a to 25d) is a three-way valve and switches between passages for the heat medium. The flow control valves 25 equal in number to the (four in this case) indoor units 2 installed are arranged. Each flow control valve 25 is disposed on the outlet side of the heat medium passage of the corresponding use side heat exchanger 26 such that one of three ways is connected to the use side heat exchanger 26, another one of the three ways is connected to a bypass 27, and the other one of the three ways is connected to the flow switching valve 23. The flow control valve 25a, the flow control valve 25b, the flow control valve 25c, and the flow control valve 25d are illustrated in that order from the bottom in Fig. 3 so as to correspond to the respective indoor units 2.

Each bypass 27 is disposed so as to connect the flow control valve 25 and the pipe 5 located between the stop valve 24 and the use side heat exchanger 26. The bypasses 27 equal in number to the indoor units 2 installed (four in this case, specifically, a bypass 27a, a bypass 27b, a bypass 27c, and a bypass 27d) are arranged. The bypass 27a, the bypass 27b, the bypass 27c, and the bypass 27d are illustrated in that order from the bottom in Fig. 3 so as to correspond to the respective indoor units 2.

The second relay unit 3b further includes two first temperature sensors 31, two second temperature sensors 32, four third temperature sensors 33, four fourth temperature sensors 34, a fifth temperature sensor 35, a pressure sensor 36, a sixth temperature sensor 37, and a seventh temperature sensor 38. Information detected by such detecting means is transmitted to a controller (controller 60) that controls an operation of the air-conditioning apparatus 100. The information is used to control, for example, a driving frequency of the pumps 21 and switching between passages for the heat medium flowing through the pipes 5.

The two first temperature sensors 31 (a first temperature sensor 31 a and a first temperature sensor 31 b) each detect a temperature of the heat medium flowing out of the corresponding intermediate heat exchanger 15, that is, the heat medium at an outlet of the intermediate heat exchanger 15. Each first temperature sensor 31 may be a thermistor, for example. The first temperature sensor 31 a is disposed to the pipe 5 on an inlet side of the pump 21 a. The first temperature sensor 31 b is disposed to the pipe 5 on an inlet side of the pump 21 b.

The two second temperature sensors 32 (a second temperature sensor 32a and a second temperature sensor 32b) each detect the temperature of the heat medium flowing into the corresponding intermediate heat exchanger 15, that is, the heat medium at an inlet of the intermediate heat exchanger 15. Each second temperature sensor 32 may be a thermistor, for example. The second temperature sensor 32a is disposed to the pipe 5 on the inlet side of the first intermediate heat exchanger 15a. The second temperature sensor 32b is disposed to the pipe 5 on the inlet side of the second intermediate heat exchanger 15b.

Each of the four third temperature sensors 33 (third temperature sensors 33a to 33d) is disposed on the inlet side of the heat medium passage of the corresponding use side heat exchanger 26 and detects the temperature of the heat medium flowing into the use side heat exchanger 26. Each third temperature sensor 33 may be a thermistor or the like. The third temperature sensors 33 equal in number to the (four in this case) indoor units 2 installed are arranged. The third temperature sensor 33a, the third temperature sensor 33b, the third temperature sensor 33c, and the third temperature sensor 33d are illustrated in that order from the bottom in Fig. 3 so as to correspond to the respective indoor units 2.

Each of the fourth temperature sensors 34 (fourth temperature sensors 34a to 34d) is disposed on the outlet side of the heat medium passage of the corresponding use side heat exchanger 26 and detects the temperature of the heat medium flowing out of the use side heat exchanger 26. Each fourth temperature sensor 34 may be a thermistor or the like. The fourth temperature sensors 34 equal in number to the (four in this case) indoor units 2 installed are arranged. The fourth temperature sensor 34a, the fourth temperature sensor 34b, the fourth temperature sensor 34c, and the fourth temperature sensor 34d are illustrated in that order from the bottom in Fig. 3 so as to correspond to the respective indoor units 2.

The fifth temperature sensor 35 is disposed on an outlet side of a heat source side refrigerant passage of the first intermediate heat exchanger 15a and detects a temperature of the heat source side refrigerant flowing out of the first intermediate heat exchanger 15a. The fifth temperature sensor 35 may be a thermistor or the like.

The pressure sensor 36 is disposed on the outlet side of the heat source side refrigerant passage of the first intermediate heat exchanger 15a and detects the pressure of the heat source side refrigerant flowing out of the first intermediate heat exchanger 15a. The pressure sensor 36 may be a pressure sensor or the like.

The sixth temperature sensor 37 is disposed on an inlet side of a heat source side refrigerant passage of the second intermediate heat exchanger 15b and detects the temperature of the heat source side refrigerant flowing into the second intermediate heat exchanger 15b. The sixth temperature sensor 37 may be a thermistor or the like.

The seventh temperature sensor 38 is disposed on an outlet side of the heat source side refrigerant passage of the second intermediate heat exchanger 15b and detects the temperature of the heat source side refrigerant flowing out of the second intermediate heat exchanger 15b. The seventh temperature sensor 38 may be a thermistor or the like.

The pipes 5 through which the heat medium is conveyed include the pipes 5 (hereinafter, referred to as "pipes 5a") connected to the first intermediate heat exchanger 15a and the pipes 5 (hereinafter, referred to as "pipes 5b") connected to the second intermediate heat exchanger 15b. Each of the pipes 5a and 5b branches into pipes (four pipes in this case) equal in number to the indoor units 2 connected to the relay unit 3. The pipes 5a and the pipes 5b are connected by the flow switching valves 22 and the flow switching valves 23. Whether the heat medium conveyed through the pipe 5a is allowed to flow into the use side heat exchanger 26 or the heat medium conveyed through the pipe 5b is allowed to flow into the use side heat exchanger 26 is determined by controlling the corresponding flow switching valves 22 and 23.

The air-conditioning apparatus 100 further includes the controller 60 that controls operations of the components included in the heat source unit 1, the relay unit 3, and the indoor units 2 on the basis of information from a remote controller for receiving instructions from various detecting means and a user. The controller 60 controls, for example, driving frequency of the compressor 10 included in the heat source unit 1, a rotation speed (including ON/OFF) of the air-sending device disposed near the heat source side heat exchanger 12, and switching of the four-way valve 11 to perform any of operation modes, which will be described later. Furthermore, the controller 60 controls a rotation speed (including ON/OFF) of the air-sending device disposed near the use side heat exchanger 26 included in each indoor unit 2.

In addition, the controller 60 controls driving of the pumps 21 arranged in the relay unit 3, opening degrees of the expansion valves 16a to 16e, switching of the flow switching valves 22 and the flow switching valves 23, opening and closing of the stop valves 24, and switching of the flow control valves 25. Specifically, the controller 60 has functions of flow control means for controlling the flow rate of the heat medium in the relay unit 3, functions of passage determining means for determining a heat medium passage, functions of ON/OFF control means for turning each component on or off, and functions of control target value changing means for appropriately changing a set target value based on information from the various detecting means. The controller may be provided for each unit. In such a case, the controllers may be enabled to communicate with each other. The controller includes a microcomputer.

In the air-conditioning apparatus 100, the compressor 10, the four-way valve 11, the heat source side heat exchanger 12, the refrigerant passage of the first intermediate heat exchanger 15a, the refrigerant passage of the second intermediate heat exchanger 15b, and the accumulator 17 are connected by the refrigerant pipes 4 through which the refrigerant flows, thus providing the refrigeration cycle. In addition, the heat medium passage of the first intermediate heat exchanger 15a, the pump 21 a, and the use side heat exchangers 26 are sequentially connected by the pipes 5a through which the heat medium flows, thus providing a heat medium circuit. Similarly, the heat medium passage of the second intermediate heat exchanger 15b, the pump 21 b, and the use side heat exchangers 26 are sequentially connected in series by the pipes 5b through which the heat medium flows, thus providing another heat medium circuit. Specifically, the plurality of use side heat exchangers 26 are connected in parallel with each of the intermediate heat exchangers 15, thus making the heat medium circuit multiple systems.

The heat medium circuit for heating is provided with a discharge valve 71 a for discharging the heat medium from the heat medium circuit. The discharge valve 71 a is disposed to the pipe 5a.

The heat medium circuit for cooling is provided with a discharge valve 71 b for discharging the heat medium from the heat medium circuit. The discharge valve 71 b is disposed to the pipe 5b.

Specifically, in the air-conditioning apparatus 100, the heat source unit 1 is connected to the relay unit 3 through the first intermediate heat exchanger 15a and the second intermediate heat exchanger 15b arranged in the relay unit 3, and the relay unit 3 is connected to the indoor units 2 through the first intermediate heat exchanger 15a and the second intermediate heat exchanger 15b. The first intermediate heat exchanger 15a and the second intermediate heat exchanger 15b allow the heat source side refrigerant, serving as a primary refrigerant, circulated through the refrigeration cycle to exchange heat with the heat medium, serving as a secondary refrigerant, circulated through the heat medium circuit.

The kinds of refrigerant used in the refrigeration cycle and the heat medium circuit will now be described. In the refrigeration cycle, a non-azeotropic refrigerant mixture, such as R407C, a near-azeotropic refrigerant mixture, such as R410A or R404A, or a single refrigerant, such as R22 or R134a, can be used. Alternatively, a natural refrigerant, such as carbon dioxide or hydrocarbon, may be used. The use of the natural refrigerant as the heat source side refrigerant can reduce the earth's greenhouse effect caused by refrigerant leakage. In particular, the use of carbon dioxide can improve heat exchange performance for heating or cooling the heat medium in the arrangement in which the heat source side refrigerant and the heat medium are allowed to flow in a counter-current manner in the first intermediate heat exchanger 15a and the second intermediate heat exchanger 15b as illustrated in Fig. 3, because carbon dioxide in a supercritical state on a high-pressure side exchanges heat without condensing.

As described above, the heat medium circuit is connected to the use side heat exchangers 26 in the indoor units 2. Accordingly, the air-conditioning apparatus 100 is premised on the use of a highly safe heat medium in consideration of the leakage of the heat medium into a room or the like in which the indoor unit 2 is installed. As regards the heat medium, for example, water, antifreeze, or a liquid mixture of water and antifreeze can be used. The above-described configuration reduces a likelihood that the refrigerant leaking from any pipe may enter an indoor space, thus providing high reliability. Furthermore, a highly heat-insulating fluorine inert liquid can be used as the heat medium if the indoor unit 2 is installed in a place that dislikes moisture, for example, a computer room.

### (Refrigerant Pipes 4)

As will be described later, the air-conditioning apparatus 100 has several operation modes. In these operation modes, the heat source side refrigerant flows through the refrigerant pipes 4 connecting the heat source unit 1 and the relay unit 3.

### (Pipes 5)

In the several operation modes performed by the air-conditioning apparatus 100, the heat medium, such as water or antifreeze, flows through the pipes 5 connecting the relay unit 3 and the indoor units 2.

### (Heat Source Side Refrigerant)

As regards the heat source side refrigerant, for example, a hydrofluorocarbon (HFC) refrigerant, such as R410A, R407C, or R404A, a hydrochlorofluorocarbon (HCFC) refrigerant, such as R22 or R134a, refrigerant that contains a double bond in its chemical formula and has a relatively low global warming potential, for example, CF₃CF=CH₂, a mixture containing the refrigerant, or a natural refrigerant, such as hydrocarbon, helium, or carbon dioxide, can be used.

### (Heat Medium)

As regards the heat medium, for example, brine (antifreeze), water, a liquid mixture of brine and water, or a liquid mixture of water and an additive with a high corrosion protection effect can be used. In the air-conditioning apparatus 100, therefore, if the heat medium leaks into the indoor space 7 through any indoor unit 2, the safety of the heat medium used is high. This contributes to the improvement of safety.

### [Operation Modes of Air-conditioning Apparatus 100]

The operation modes performed by the air-conditioning apparatus 100 will now be described.

The air-conditioning apparatus 100 enables each indoor unit 2, on the basis of an instruction from the indoor unit 2, to perform the cooling operation or the heating operation. More specifically, the air-conditioning apparatus 100 enables all of the indoor units 2 to perform the same operation and also enables the indoor units 2 to perform different operations. In other words, the air-conditioning apparatus 100 is an air-conditioning apparatus capable of performing the cooling operation and the heating operation at the same time.

Four operation modes performed by the air-conditioning apparatus 100, that is, a cooling only operation mode in which all of the operating indoor units 2 perform the cooling operation, a heating only operation mode in which all of the operating indoor units 2 perform the heating operation, a cooling main operation mode in which a cooling load is larger in a cooling and heating mixed operation, and a heating main operation mode in which a heating load is larger in the cooling and heating mixed operation will be described below in accordance with the flows of the refrigerant.

### (Cooling Only Operation Mode)

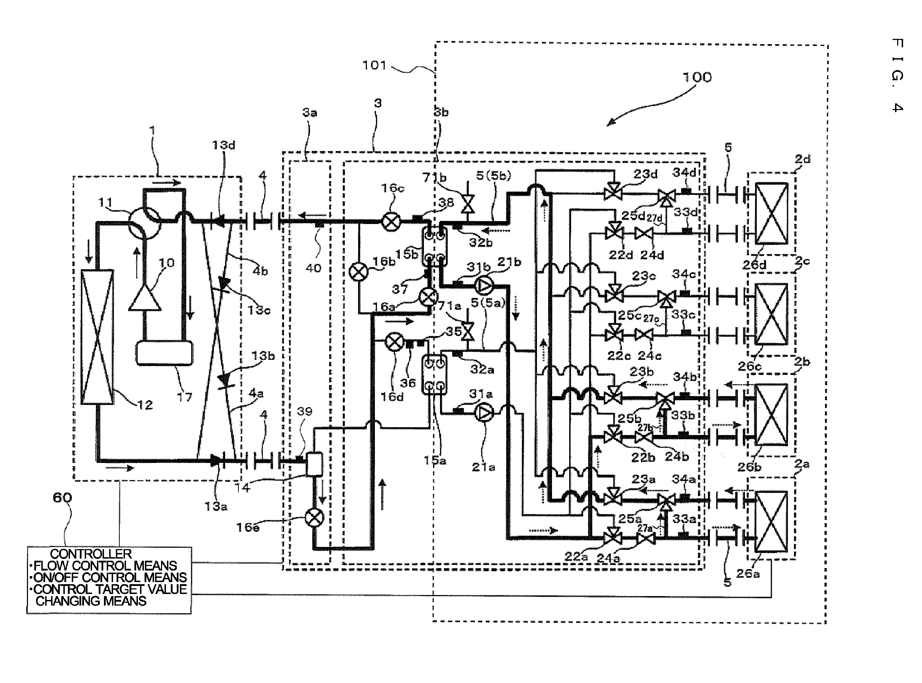

Fig. 4 is a refrigerant circuit diagram illustrating the flows of the refrigerant in the cooling only operation mode of the air-conditioning apparatus 100. The cooling only operation mode will be described on the assumption that, for example, a cooling load is generated only in the use side heat exchangers 26a and 26b in Fig. 4. In other words, Fig. 4 illustrates a case where no cooling load is generated in the use side heat exchangers 26c and 26d. In Fig. 4, pipes indicated by thick lines correspond to pipes through which the refrigerants (the heat source side refrigerant and the heat medium) are circulated. Furthermore, solid-line arrows indicate the direction of flow of the heat source side refrigerant and broken-line arrows indicate the direction of flow of the heat medium.

In the cooling only operation mode illustrated in Fig. 4, in the heat source unit 1, the four-way valve 11 is switched so that the heat source side refrigerant discharged from the compressor 10 flows into the heat source side heat exchanger 12. In the relay unit 3, the pump 21 a is in non-operation, the pump 21 b is driven, the stop valves 24a and 24b are opened, and the stop valves 24c and 24d are closed so that the heat medium is circulated between the second intermediate heat exchanger 15b and the use side heat exchangers 26 (the use side heat exchanger 26a and the use side heat exchanger 26b). In this state, the compressor 10 is started to operate.

First, the flow of the heat source side refrigerant in the refrigeration cycle will be described.

Low-temperature low-pressure refrigerant is compressed into high-temperature high-pressure gas refrigerant by the compressor 10 and is then discharged therefrom. The high-temperature high-pressure gas refrigerant discharged from the compressor 10 passes through the four-way valve 11 and flows into the heat source side heat exchanger 12. In the heat source side heat exchanger 12, the refrigerant condenses and liquefies while transferring heat to outdoor air, so that the refrigerant turns into high-pressure liquid refrigerant. The high-pressure liquid refrigerant, which has flowed out of the heat source side heat exchanger 12, passes through the check valve 13a, flows out of the heat source unit 1, passes through the refrigerant pipe 4, and flows into the first relay unit 3a. The high-pressure liquid refrigerant, which has flowed into the first relay unit 3a, flows into the gas-liquid separator 14, passes through the expansion valve 16e, and then flows into the second relay unit 3b.

The refrigerant, which has flowed into the second relay unit 3b, is expanded by the expansion valve 16a, so that the refrigerant turns into low-temperature, low-pressure two-phase gas-liquid refrigerant. The two-phase gas-liquid refrigerant flows into the second intermediate heat exchanger 15b, acting as an evaporator, removes heat from the heat medium circulated through the heat medium circuit, so that the refrigerant turns into low-temperature low-pressure gas refrigerant while cooling the heat medium. The gas refrigerant, which has flowed out of the second intermediate heat exchanger 15b, passes through the expansion valve 16c, flows out of the second relay unit 3b and the first relay unit 3a, passes through the refrigerant pipe 4, and flows into the heat source unit 1. The refrigerant, which has flowed into the heat source unit 1, passes through the check valve 13d, the four-way valve 11, and the accumulator 17, and is then again sucked into the compressor 10. The expansion valves 16b and 16d are allowed to have such a small opening degree that the refrigerant does not flow through the valve and the expansion valve 16c is fully opened in order to prevent pressure loss.

Next, the flow of the heat medium in the heat medium circuit will be described.

In the cooling only operation mode, the pump 21 a is in non-operation and the heat medium is accordingly circulated through the pipes 5b. The pump 21 b allows the heat medium cooled by the heat source side refrigerant in the second intermediate heat exchanger 15b to flow through the pipes 5b. The heat medium, pressurized by the pump 21 b, leaving the pump 21 b passes through the flow switching valves 22 (the flow switching valve 22a and the flow switching valve 22b) and the stop valves 24 (the stop valve 24a and the stop valve 24b) and flows into the use side heat exchangers 26 (the use side heat exchanger 26a and the use side heat exchanger 26b). In each use side heat exchanger 26, the heat medium removes heat from indoor air to cool the air-conditioned area, such as an indoor space, where the indoor unit 2 is installed.

After that, the heat medium flows out of the use side heat exchangers 26 and flows into the flow control valves 25 (the flow control valve 25a and the flow control valve 25b). At this time, each flow control valve 25 allows only the amount of heat medium required to provide an air-conditioning load needed in the air-conditioned area, such as an indoor space, to flow into the corresponding use side heat exchanger 26. The other heat medium flows through each of the bypasses 27 (the bypass 27a and the bypass 27b) so as to bypass the use side heat exchanger 26.

The heat medium passing through each bypass 27 does not contribute to heat exchange and merges with the heat medium leaving the corresponding use side heat exchanger 26. The heat medium then passes through the corresponding flow switching valve 23 (the flow switching valve 23a or the flow switching valve 23b) and flows into the second intermediate heat exchanger 15b and is then again sucked into the pump 21 b. Note that the air-conditioning load needed in each air-conditioned area, such as an indoor space, can be provided by controlling the difference between a temperature detected by the third temperature sensor 33 and a temperature detected by the fourth temperature sensor 34 at a target value.

In this case, it is unnecessary to supply the heat medium to each use side heat exchanger 26 having no thermal load (including thermo-off). Accordingly, the corresponding stop valve 24 is closed to block the passage so that the heat medium does not flow into the use side heat exchanger 26. In Fig. 4, the heat medium flows into the use side heat exchanger 26a and the use side heat exchanger 26b because these heat exchangers each have a thermal load. The use side heat exchanger 26c and the use side heat exchanger 26d have no thermal load and the corresponding stop valves 24c and 24d are accordingly closed. When a cooling load is generated in the use side heat exchanger 26c or the use side heat exchanger 26d, the stop valve 24c or the stop valve 24d may be opened so that the heat medium is circulated.

The same applies to the heating only operation mode, the cooling main operation mode, and the heating only operation mode which will be described later.

### (Heating Only Operation Mode)

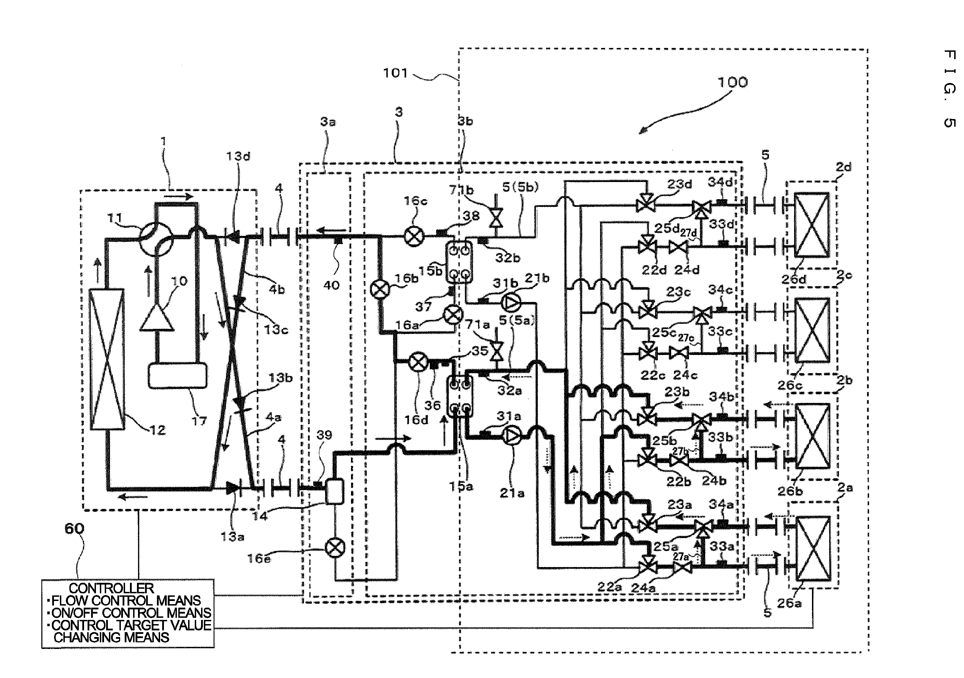

Fig. 5 is a refrigerant circuit diagram illustrating the flows of the refrigerant in the heating only operation mode of the air-conditioning apparatus 100. The heating only operation mode will be described on the assumption that, for example, a heating load is generated only in the use side heat exchangers 26a and 26b in Fig. 5. In other words, Fig. 5 illustrates a case where no heating load is generated in the use side heat exchangers 26c and 26d. In Fig. 5, pipes indicated by thick lines correspond to pipes through which the refrigerants (the heat source side refrigerant and the heat medium) are circulated. Furthermore, solid-line arrows indicate the direction of flow of the heat source side refrigerant and broken-line arrows indicate the direction of flow of the heat medium.

In the heating only operation mode illustrated in Fig. 5, in the heat source unit 1, the four-way valve 11 is switched so that the heat source side refrigerant discharged from the compressor 10 flows into the relay unit 3 without passing through the heat source side heat exchanger 12. In the relay unit 3, the pump 21 a is driven, the pump 21 b is in non-operation, the stop valves 24a and 24b are opened, and the stop valves 24c and 24d are closed to switch between the heat medium flow directions so that the heat medium is circulated between the first intermediate heat exchanger 15a and the use side heat exchangers 26 (the use side heat exchanger 26a and the use side heat exchanger 26b). In this state, the compressor 10 is started to operate.

First, the flow of the heat source side refrigerant in the refrigeration cycle will be described.

Low-temperature low-pressure refrigerant is compressed into high-temperature high-pressure gas refrigerant by the compressor 10 and is then discharged therefrom. The high-temperature high-pressure gas refrigerant discharged from the compressor 10 passes through the four-way valve 11, flows through the first connecting pipe 4a, passes through the check valve 13b, and flows out of the heat source unit 1. The high-temperature high-pressure gas refrigerant, which has flowed out of the heat source unit 1, passes through the refrigerant pipe 4 and flows into the first relay unit 3a. The high-temperature high-pressure gas refrigerant, which has flowed into the first relay unit 3a, flows into the gas-liquid separator 14 and then flows into the first intermediate heat exchanger 15a. The high-temperature high-pressure gas refrigerant, which has flowed into the first intermediate heat exchanger 15a, condenses and liquefies while transferring heat to the heat medium circulated through the heat medium circuit, so that the refrigerant turns into high-pressure liquid refrigerant.

The high-pressure liquid refrigerant leaving the first intermediate heat exchanger 15a is expanded by the expansion valve 16d, so that the refrigerant turns into a low-temperature, low-pressure two-phase gas-liquid state. The refrigerant in the two-phase gas-liquid state, obtained by expanding through the expansion valve 16d, passes through the expansion valve 16b, flows through the refrigerant pipe 4, and then flows into the heat source unit 1. The refrigerant, which has flowed into the heat source unit 1, passes through the check valve 13c and the second connecting pipe 4b and then flows into the heat source side heat exchanger 12, acting as an evaporator. The refrigerant, which has flowed into the heat source side heat exchanger 12, removes heat from the outdoor air in the heat source side heat exchanger 12, so that the refrigerant turns into low-temperature low-pressure gas refrigerant. The low-temperature low-pressure gas refrigerant leaving the heat source side heat exchanger 12 passes through the four-way valve 11 and the accumulator 17 and then returns to the compressor 10. The expansion valve 16a, the expansion valve 16c, and the expansion valve 16e are allowed to have such a small opening degree that the refrigerant does not flow through the valve.

Next, the flow of the heat medium in the heat medium circuit will be described.

In the heating only operation mode, the pump 21 b is in non-operation and the heat medium is accordingly circulated through the pipes 5a. The pump 21 a allows the heat medium heated by the heat source side refrigerant in the first intermediate heat exchanger 15a to flow through the pipes 5a. The heat medium, pressurized by the pump 21 a, leaving the pump 21 a passes through the flow switching valves 22 (the flow switching valve 22a and the flow switching valve 22b) and the stop valves 24 (the stop valve 24a and the stop valve 24b) and flows into the use side heat exchangers 26 (the use side heat exchanger 26a and the use side heat exchanger 26b). In each use side heat exchanger 26, the heat medium transfers heat to the indoor air to heat the air-conditioned area, such as an indoor space, where the indoor unit 2 is installed.

After that, the heat medium flows out of the use side heat exchangers 26 and flows into the flow control valves 25 (the flow control valve 25a and the flow control valve 25b). At this time, each flow control valve 25 allows only the amount of heat medium required to provide an air-conditioning load needed in the air-conditioned area, such as an indoor space, to flow into the corresponding use side heat exchanger 26. The other heat medium flows through each of the bypasses 27 (the bypass 27a and the bypass 27b) so as to bypass the use side heat exchanger 26.

The heat medium passing through each bypass 27 does not contribute to heat exchange and merges with the heat medium leaving the corresponding use side heat exchanger 26. The heat medium then passes through the corresponding flow switching valve 23 (the flow switching valve 23a or the flow switching valve 23b) and flows into the first intermediate heat exchanger 15a and is then again sucked into the pump 21 a. Note that the air-conditioning load needed in each air-conditioned area, such as an indoor space, can be provided by controlling the difference between a temperature detected by the third temperature sensor 33 and a temperature detected by the fourth temperature sensor 34 at a target value.

### (Cooling Main Operation Mode)

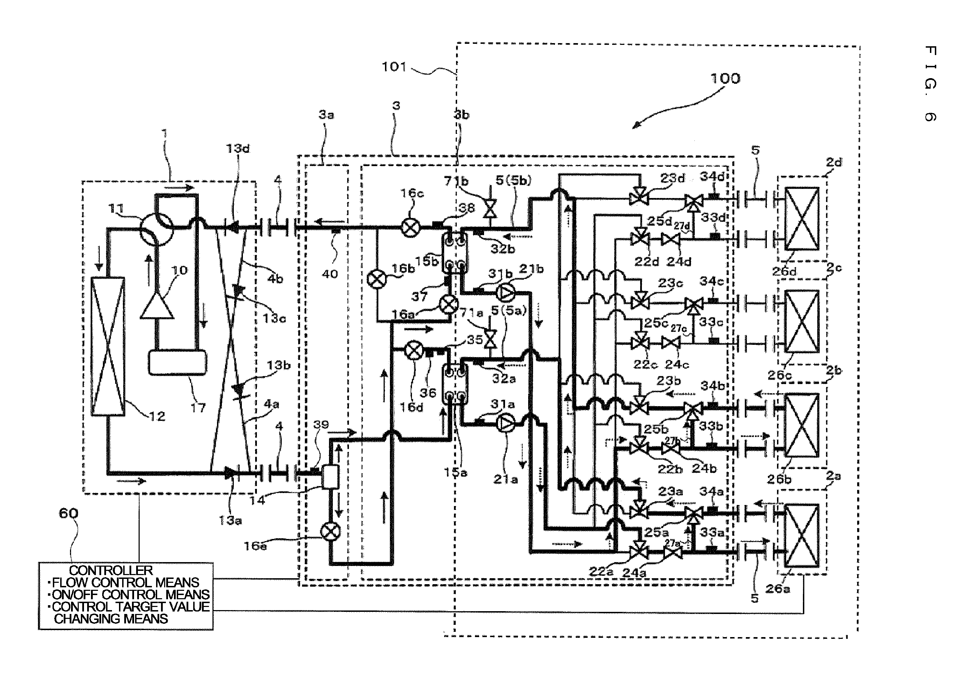

Fig. 6 is a refrigerant circuit diagram illustrating the flows of the refrigerant in the cooling main operation mode of the air-conditioning apparatus 100. The cooling main operation mode will be described on the assumption that, for example, a heating load is generated in the use side heat exchanger 26a and a cooling load is generated in the use side heat exchanger 26b in Fig. 6. In other words, Fig. 6 illustrates a case where neither heating load nor cooling load is generated in the use side heat exchangers 26c and 26d. In Fig. 6, pipes indicated by thick lines correspond to pipes through which the refrigerants (the heat source side refrigerant and the heat medium) are circulated. Furthermore, solid-line arrows indicate the direction of flow of the heat source side refrigerant and broken-line arrows indicate the direction of flow of the heat medium.

In the cooling main operation mode illustrated in Fig. 6, in the heat source unit 1, the four-way valve 11 is switched so that the heat source side refrigerant discharged from the compressor 10 flows into the heat source side heat exchanger 12. In the relay unit 3, the pumps 21 a and 21 b are driven, the stop valves 24a and 24b are opened, and the stop valves 24c and 24d are closed so that the heat medium is circulated between the first intermediate heat exchanger 15a and the use side heat exchanger 26a and the heat medium is circulated between the second intermediate heat exchanger 15b and the use side heat exchanger 26b. In this state, the compressor 10 is started to operate.

First, the flow of the heat source side refrigerant in the refrigeration cycle will be described.

Low-temperature low-pressure refrigerant is compressed into high-temperature high-pressure gas refrigerant by the compressor 10 and is then discharged therefrom. The high-temperature high-pressure gas refrigerant discharged from the compressor 10 passes through the four-way valve 11 and flows into the heat source side heat exchanger 12. In the heat source side heat exchanger 12, the refrigerant condenses while transferring heat to the outdoor air, so that the refrigerant turns into a two-phase gas-liquid refrigerant. The two-phase gas-liquid refrigerant, which has flowed out of the heat source side heat exchanger 12, passes through the check valve 13a, flows out of the heat source unit 1, passes through the refrigerant pipe 4, and flows into the first relay unit 3a. The two-phase gas-liquid refrigerant, which has flowed into the first relay unit 3a, flows into the gas-liquid separator 14 where the refrigerant is separated into gas refrigerant and liquid refrigerant. These refrigerants flow into the second relay unit 3b.

The gas refrigerant, obtained by separation through the gas-liquid separator 14, flows into the first intermediate heat exchanger 15a. The gas refrigerant, which has flowed into the first intermediate heat exchanger 15a, condenses and liquefies while transferring heat to the heat medium circulated through the heat medium circuit, so that the refrigerant turns into liquid refrigerant. The liquid refrigerant, which has flowed out of the first intermediate heat exchanger 15a, passes through the expansion valve 16d.

On the other hand, the liquid refrigerant, obtained by separation through the gas-liquid separator 14, passes through the expansion valve 16e. After that, the liquid refrigerant merges with the liquid refrigerant leaving the expansion valve 16d after condensation and liquefaction in the first intermediate heat exchanger 15a. The refrigerant is then expanded by the expansion valve 16a, so that the refrigerant turns into low-temperature, low-pressure two-phase gas-liquid refrigerant. The refrigerant flows into the second intermediate heat exchanger 15b.

The two-phase gas-liquid refrigerant removes heat from the heat medium circulated through the heat medium circuit in the second intermediate heat exchanger 15b, acting as an evaporator, so that the refrigerant turns into low-temperature low-pressure gas refrigerant while cooling the heat medium. The gas refrigerant, which has flowed out of the second intermediate heat exchanger 15b, passes through the expansion valve 16c, flows out of the second relay unit 3b and the first relay unit 3a, passes through the refrigerant pipe 4, and flows into the heat source unit 1. The refrigerant, which has flowed into the heat source unit 1, passes through the check valve 13d, the four-way valve 11, and the accumulator 17, and is then again sucked into the compressor 10. The expansion valve 16b is allowed to have such a small opening degree that the refrigerant does not flow through the valve and the expansion valve 16c is fully opened in order to prevent pressure loss.

Next, the flow of the heat medium in the heat medium circuit will be described.

In the cooling main operation mode, both the pump 21 a and the pump 21 b are driven and the heat medium is accordingly circulated through the pipes 5a and 5b. The pump 21 a allows the heat medium heated by the heat source side refrigerant in the first intermediate heat exchanger 15a to flow through the pipes 5a. The pump 21 b allows the heat medium cooled by the heat source side refrigerant in the second intermediate heat exchanger 15b to flow through the pipes 5b.

The heat medium, pressurized by the pump 21 a, leaving the pump 21 a passes through the flow switching valve 22a and the stop valve 24a, and then flows into the use side heat exchanger 26a. The heat medium transfers heat to the indoor air in the use side heat exchanger 26a to heat the air-conditioned area, such as an indoor space, where the indoor unit 2 is installed.

In addition, the heat medium, pressurized by the pump 21 b, leaving the pump 21 b passes through the flow switching valve 22b and the stop valve 24b, and then flows into the use side heat exchanger 26b. The heat medium removes heat from the indoor air in the use side heat exchanger 26b to cool the air-conditioned area, such as an indoor space, where the indoor unit 2 is installed.

The heat medium, used for heating, flows into the flow control valve 25a. At this time, the flow control valve 25a allows only the amount of heat medium required to provide an air-conditioning load needed in the air-conditioned area to flow into the use side heat exchanger 26a. The other heat medium flows through the bypass 27a so as to bypass the use side heat exchanger 26a. The heat medium passing through the bypass 27a does not contribute to heat exchange and merges with the heat medium leaving the use side heat exchanger 26a. The heat medium then passes through the flow switching valve 23a and flows into the first intermediate heat exchanger 15a and is then again sucked into the pump 21 a.

Similarly, the heat medium, used for cooling, flows into the flow control valve 25b. At this time, the flow control valve 25b allows only the amount of heat medium required to provide an air-conditioning load needed in the air-conditioned area to flow into the use side heat exchanger 26b. The other heat medium flows through the bypass 27b so as to bypass the use side heat exchanger 26b. The heat medium passing through the bypass 27b does not contribute to heat exchange and merges with the heat medium leaving the use side heat exchanger 26b. The heat medium then passes through the flow switching valve 23b and flows into the second intermediate heat exchanger 15b and is then again sucked into the pump 21 b.

Throughout this mode, the flow switching valves 22 (the flow switching valve 22a and the flow switching valve 22b) and the flow switching valves 23 (the flow switching valve 23a and the flow switching valve 23b) allow the warm heat medium (the heat medium used for the heating load) and the cold heat medium (the heat medium used for the cooling load) to flow into the use side heat exchanger 26a having the heating load and the use side heat exchanger 26b having the cooling load, respectively, without mixing with each other. Note that the air-conditioning load needed in each air-conditioned area, such as an indoor space, can be provided by controlling the difference between a temperature detected by the third temperature sensor 33 and a temperature detected by the fourth temperature sensor 34 at a target value.

### (Heating Main Operation Mode)

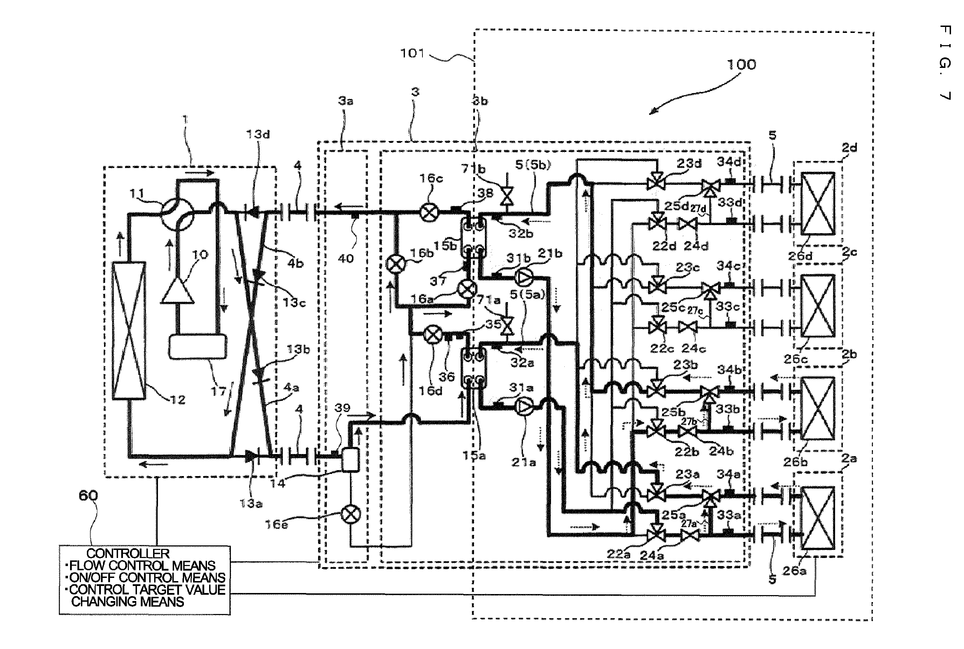

Fig. 7 is a refrigerant circuit diagram illustrating the flows of the refrigerant in the heating main operation mode of the air-conditioning apparatus 100. The heating main operation mode will be described on the assumption that, for example, a heating load is generated in the use side heat exchanger 26a and a cooling load is generated in the use side heat exchanger 26b in Fig. 7. In other words, Fig. 7 illustrates a case where neither heating load nor cooling load is generated in the use side heat exchangers 26c and 26d. In Fig. 7, pipes indicated by thick lines correspond to pipes through which the refrigerants (the heat source side refrigerant and the heat medium) are circulated. Furthermore, solid-line arrows indicate the direction of flow of the heat source side refrigerant and broken-line arrows indicate the direction of flow of the heat medium.

In the heating main operation mode illustrated in Fig. 7, in the heat source unit 1, the four-way valve 11 is switched so that the heat source side refrigerant discharged from the compressor 10 flows into the relay unit 3 without passing through the heat source side heat exchanger 12. In the relay unit 3, the pumps 21 a and 21 b are driven, the stop valves 24a and 24b are opened, and the stop valves 24c and 24d are closed so that the heat medium is circulated between the first intermediate heat exchanger 15a and the use side heat exchanger 26a and the heat medium is circulated between the second intermediate heat exchanger 15b and the use side heat exchanger 26b. In this state, the compressor 10 is started to operate.

First, the flow of the heat source side refrigerant in the refrigeration cycle will be described.

Low-temperature low-pressure refrigerant is compressed into high-temperature high-pressure gas refrigerant by the compressor 10 and is then discharged therefrom. The high-temperature high-pressure gas refrigerant discharged from the compressor 10 passes through the four-way valve 11, flows through the first connecting pipe 4a, passes through the check valve 13b, and flows out of the heat source unit 1. The high-temperature high-pressure gas refrigerant, which has flowed out of the heat source unit 1, passes through the refrigerant pipe 4 and flows into the first relay unit 3a. The high-temperature high-pressure gas refrigerant, which has flowed into the first relay unit 3a, flows into the gas-liquid separator 14 and then flows into the first intermediate heat exchanger 15a. The high-temperature high-pressure gas refrigerant, which has flowed into the first intermediate heat exchanger 15a, condenses and liquefies while transferring heat to the heat medium circulated through the heat medium circuit, so that the refrigerant turns into high-pressure liquid refrigerant.

The high-pressure liquid refrigerant leaving the first intermediate heat exchanger 15a is expanded by the expansion valve 16d, so that the refrigerant turns into a low-temperature, low-pressure two-phase gas-liquid state. The refrigerant in the two-phase gas-liquid state, obtained by expanding through the expansion valve 16d, is divided into a flow to the expansion valve 16a and a flow to the expansion valve 16b. As regards the refrigerant flowing through the expansion valve 16a, the refrigerant is further expanded by the expansion valve 16a, so that the refrigerant turns into low-temperature, low-pressure two-phase gas-liquid refrigerant. The refrigerant flows into the second intermediate heat exchanger 15b, acting as an evaporator. The refrigerant, which has flowed into the second intermediate heat exchanger 15b, removes heat from the heat medium in the second intermediate heat exchanger 15b, so that the refrigerant turns into low-temperature low-pressure gas refrigerant. The low-temperature low-pressure gas refrigerant leaving the second intermediate heat exchanger 15b passes through the expansion valve 16c.

As regards the refrigerant, expanded by the expansion valve 16d, flowing through the expansion valve 16b, the refrigerant merges with the refrigerant which has passed through the second intermediate heat exchanger 15b and the expansion valve 16c, so that the low-temperature low-pressure refrigerant exhibits a higher quality. The refrigerant after merging flows out of the second relay unit 3b and the first relay unit 3a, passes through the refrigerant pipe 4, and flows into the heat source unit 1. The refrigerant, which has flowed into the heat source unit 1, passes through the check valve 13c and the second connecting pipe 4b and flows into the heat source side heat exchanger 12, acting as an evaporator. The refrigerant, which has flowed into the heat source side heat exchanger 12, removes heat from the outdoor air in the heat source side heat exchanger 12, so that the refrigerant turns into low-temperature low-pressure gas refrigerant. The low-temperature low-pressure gas refrigerant leaving the heat source side heat exchanger 12 flows through the four-way valve 11 and the accumulator 17 and then returns to the compressor 10. The expansion valve 16e is allowed to have such a small opening degree that the refrigerant does not flow through the valve.

Next, the flow of the heat medium in the heat medium circuit will be described.

In the heating main operation mode, both the pump 21 a and the pump 21 b are driven and the heat medium is accordingly circulated through the pipes 5a and 5b. The pump 21 a allows the heat medium heated by the heat source side refrigerant in the first intermediate heat exchanger 15a to flow through the pipes 5a. The pump 21 b allows the heat medium cooled by the heat source side refrigerant in the second intermediate heat exchanger 15b to flow through the pipes 5b.

The heat medium, pressurized by the pump 21 a, leaving the pump 21 a passes through the flow switching valve 22a and the stop valve 24a and then flows into the use side heat exchanger 26a. The heat medium transfers heat to the indoor air in the use side heat exchanger 26a to heat the air-conditioned area, such as an indoor space, where the indoor unit 2 is installed.

In addition, the heat medium, pressurized by the pump 21 b, leaving the pump 21 b passes through the flow switching valve 22b and the stop valve 24b and then flows into the use side heat exchanger 26b. The heat medium removes heat from the indoor air in the use side heat exchanger 26b to cool the air-conditioned area, such as an indoor space, where the indoor unit 2 is installed.

The heat medium leaving the use side heat exchanger 26a flows into the flow control valve 25a. At this time, the flow control valve 25a allows only the amount of heat medium required to provide an air-conditioning load needed in the air-conditioned area, such as an indoor space, to flow into the use side heat exchanger 26a. The other heat medium flows through the bypass 27a so as to bypass the use side heat exchanger 26a. The heat medium passing through the bypass 27a does not contribute to heat exchange and merges with the heat medium leaving the use side heat exchanger 26a. The heat medium then passes through the flow switching valve 23a and flows into the first intermediate heat exchanger 15a and is then again sucked into the pump 21 a.

Similarly, the heat medium leaving the use side heat exchanger 26b flows into the flow control valve 25b. At this time, the flow control valve 25b allows only the amount of heat medium required to provide an air-conditioning load needed in the air-conditioned area, such as an indoor space, to flow into the use side heat exchanger 26b. The other heat medium flows through the bypass 27b so as to bypass the use side heat exchanger 26b. The heat medium passing through the bypass 27b does not contribute to heat exchange and merges with the heat medium leaving the use side heat exchanger 26b. The heat medium then passes through the flow switching valve 23b and flows into the second intermediate heat exchanger 15b and is then again sucked into the pump 21 b.

Throughout this mode, the flow switching valves 22 (the flow switching valve 22a and the flow switching valve 22b) and the flow switching valves 23 (the flow switching valve 23a and the flow switching valve 23b) allow the warm heat medium and the cold heat medium to flow into the use side heat exchanger 26a having the heating load and the use side heat exchanger 26b having the cooling load, respectively, without mixing with each other. Note that the air-conditioning load needed in each air-conditioned area, such as an indoor space, can be provided by controlling the difference between a temperature detected by the third temperature sensor 33 and a temperature detected by the fourth temperature sensor 34 at a target value.

As described above, while the heating load is generated in any of the use side heat exchangers 26a to 26d in the air-conditioning apparatus 100, the corresponding one of the flow switching valves 22a to 22d and the corresponding one of the flow switching valves 23a to 23d are switched to the passage connected to the first intermediate heat exchanger 15a for heating. While the cooling load is generated in any of the use side heat exchangers 26a to 26d, the corresponding one of the flow switching valves 22a to 22d and the corresponding one of the flow switching valves 23a to 23d are switched to the passage connected to the second intermediate heat exchanger 15b for cooling. Thus, the heating operation or the cooling operation can be freely performed in each indoor unit 2.

Each of the flow switching valves 22a to 22d and the flow switching valves 23a to 23d may be a component that can switch between passages, for example, a three-way valve capable of switching between flow directions in a three-way passage or a combination of two two-way valves, such as on-off valves, for opening and closing a two-way passage. Alternatively, a component capable of changing a flow rate in a three-way passage, for example, a stepping-motor-driven mixing valve, may be used, or, a combination of two components capable of changing a flow rate in a two-way passage, for example, two electronic expansion valves, may be used as each of the flow switching valves. In this case, water hammer caused when a passage is suddenly opened or closed can be prevented.

Although Figs. 3 to 7 illustrate the case where the flow control valves 25a to 25d are mixing valves arranged downstream of the use side heat exchangers 26a to 26d, the flow control valves 25a to 25d may be arranged on an upstream side of the use side heat exchangers 26a to 26d.

### [Control for Changing Number of Pumps 21 Operated in Air-conditioning Apparatus 100]

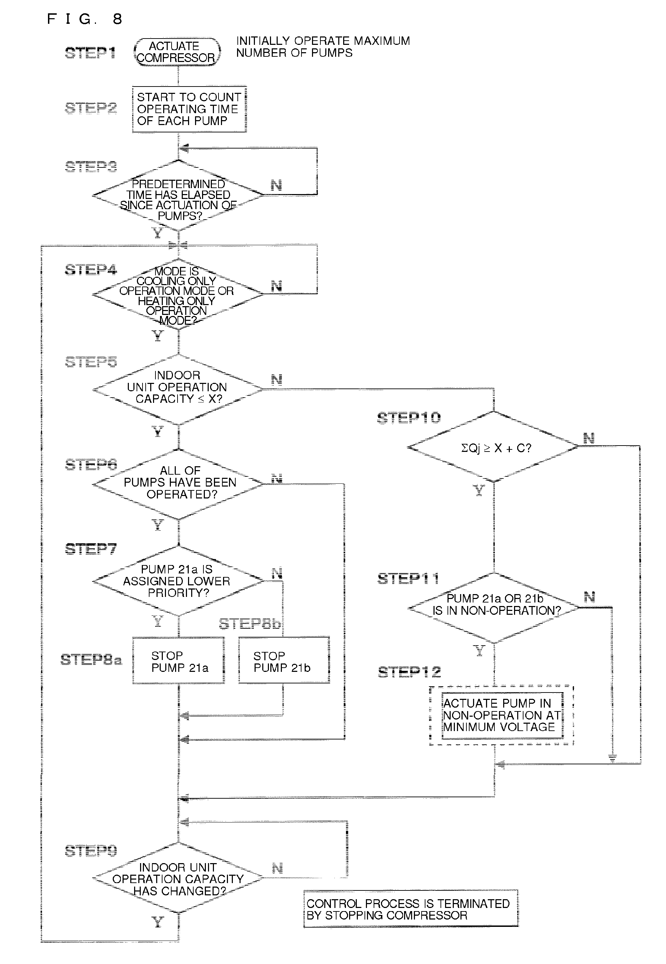

Fig. 8 is a flowchart illustrating an exemplary control process for changing the number of pumps 21 operated in the air-conditioning apparatus 100. Control for changing the number of operated pumps 21 at a low flow rate in the air-conditioning apparatus 100 will be described with reference to Fig. 8. The controller 60 performs the control process for changing the number of operated pumps 21.

### (STEP 1)

In STEP 1, the air-conditioning apparatus 100 starts an air-conditioning operation and the compressor 10 is actuated. Just after actuation of the compressor 10, for example, a maximum number of pumps 21 are operated in order to allow an extra amount of heat medium to flow in the air-conditioning apparatus 100.

### (STEP 2)

In STEP 2, the maximum number of pumps 21 (the two pumps 21 a and 21 b in Figs. 3 to 7) are started to operate. An accumulated period of operating time of each pump is recorded.

### (STEP 3)

In STEP 3, the current operation is repeated until a predetermined period of time elapses.

### (STEP 4)

In STEP 4, whether all of the pumps 21 are used for cooling or heating, that is, whether the operation mode is the cooling only operation mode or the heating only operation mode is determined.

If the operation mode is the cooling only operation mode or the heating only operation mode, the process proceeds to STEP 5. If NO, the current operation is maintained.

### (STEP 5)

In STEP 5, whether a capacity for operating the indoor units 2 (operation capacity for the indoor units 2) is less than or equal to a predetermined value X is determined. The predetermined value X is a reference for changing the number of operated pumps 21. The predetermined value X is set to any value based on actual performance of the air-conditioning apparatus 100.

If the operation capacity is less than or equal to the predetermined value X, the process proceeds to STEP 6. If NO, the process proceeds to STEP 10.

The predetermined value X is set to any value based on flow rate characteristics of the pumps 21, the length of the water pipes 5, and the capacities of the indoor units 2 connected.

### (STEP 6)

STEP 6 is processing to be performed when it is determined that the amount of heat medium circulated is too much relative to the operation capacity for the indoor units 2.

In this case, whether the maximum number of pumps 21 have been operated is determined.

If it is determined that the maximum number of pumps 21 have been operated, the process proceeds to STEP 7. If NO, the process proceeds to STEP 9.

### (STEP 7)

In STEPs 7 and 8, rotation control is performed to equalize the periods of operating time of the pumps 21.

In STEP 7, priorities assigned to the operated pumps 21 are determined.

The pump 21 assigned a lower priority is stopped.

The priority assigned to each of the pumps 21 is determined based on the accumulated period of operating time of the pump 21. Alternatively, the number of times the pump 21 is actuated may be counted for each of the pumps 21 and the priority assigned to each of the pumps 21 may be determined based on the number of times the pump 21 is actuated.

### (STEP 8)

In STEP 8, the pump 21 assigned a lower priority is stopped and the process proceeds to STEP 9.

For example, if the pumps 21 a and 21 b are operated and the pump 21 a is assigned a lower priority than the pump 21 b, the pump 21 a is stopped in STEP 8a.

For example, if the pumps 21 a and 21 b are operated and the pump 21 b is assigned a lower priority than the pump 21 a, the pump 21 b is stopped in STEP 8b.

### (STEP 9)

In STEP 9, whether the operation capacity for the indoor units 2 has changed is determined.

If the operation capacity for the indoor units 2 has changed, the process is returned to STEP 4 in order to make a determination.

### (STEP 10)

In STEPs 10 to 12, control for changing the number of operated pumps 21 from one to two pumps because of an increase in operation capacity for the indoor units 2 is performed.

In STEP 10, whether the operation capacity for the indoor units 2 is greater than the predetermined value X and is greater than or equal to a value (hereinafter, referred to as a "value C") that takes a differential into account is determined.

The differential is provided to stabilize an operation. Providing the differential can reduce frequent changing of the number of operated pumps 21.

If the operation capacity (ΣQj) for the indoor units 2 is greater than the predetermined value X and is greater than or equal to the value C, the process proceeds to STEP 11. If NO, the process proceeds to STEP 9 without doing anything.

The value C is used to reduce frequent changing of the number of operated pumps 21 and is set to any value based on the actual performance of the air-conditioning apparatus 100. In other words, the value C is used to reduce the number of times the pump 21 is actuated or stopped. The value C is determined based on the flow rate characteristics (maximum circulation amount) of each pump 21 and a permissible total length of pipes (pressure loss in the entire water circuit).

### (STEP 11)

In STEP 11, whether the maximum number of pumps 21 are operated is determined.

If the maximum number of pumps 21 are operated, the process proceeds to STEP 9 without doing anything.

If the number of operated pumps 21 is not equal to the maximum number, the process proceeds to STEP 12.

### (STEP 12)

In STEP 12, the pump 21 in non-operation is actuated. The pump 21 is actuated at minimum input power (minimum voltage) in order to suppress a sudden increase in water pressure.

Then, the process proceeds to STEP 9.

The control is terminated by stopping the compressor 10.

Although Embodiment has been described with respect to the control for changing the number of pumps 21 in the use of the two pumps 21, the number of pumps 21 is not limited to two. Similar control for changing the number of pumps 21 in the use of three or more pumps 21 can be achieved.

In the use of three or more pumps 21, the number of operated pumps 21 is defined in STEPs 6 to 8. The pump 21 is stopped in order of increasing priority depending on the operation capacity for the indoor units 2.

As described above, the air-conditioning apparatus 100 is configured such that the number of operated pumps 21 is changed depending on the operation capacity for the indoor units 2 connected. Thus, a highly efficient operation with reduced pump power consumption is achieved. Such an advantage is particularly great when the heat medium flows at a low flow rate. Additionally, since the current operation mode of the indoor unit 2 connected is taken into consideration, the efficiency of operation can be further increased.

Although Embodiment has been described with respect to the case where both the first temperature sensors 31 and the second temperature sensors 32 are arranged, it is only required that either of the first temperature sensors 31 and the second temperature sensors 32 are arranged in order to control the pumps 21 a and 21 b. The other temperature detecting means may be eliminated.

As regards the heat source side refrigerant, for example, hydrofluorocarbon (HFC) refrigerant, such as R410A, R407C, or R404A, hydrochlorofluorocarbon (HCFC) refrigerant, such as R22 or R134a, refrigerant that contains a double bond in its chemical formula and has a relatively low global warming potential, for example, CF₃CF=CH₂, a mixture containing the refrigerant, or natural refrigerant, such as hydrocarbon, helium, or carbon dioxide, can be used in Embodiment as described above. The refrigerant is not limited to any of those examples. In addition, although Embodiment has been described with respect to the case where the heat source unit 1 includes the accumulator 17, the air-conditioning apparatus 100 will act in the same way and offer the same advantages if the accumulator 17 is eliminated.

Each of the heat source side heat exchanger 12 and the use side heat exchangers 26 is often typically provided with an air-sending device, such as a fan, to send air in order to promote condensation or evaporation. The configuration is not limited to such a case. For example, a heat exchanger that uses radiation, for example, a panel heater, can be used as the use side heat exchanger 26 and a water-cooled heat exchanger that transfers heat through water or antifreeze can be used as the heat source side heat exchanger 12. Any type of heat exchanger capable of transferring heat or removing heat may be used.

Although the case where the flow switching valve 22, the flow switching valve 23, the stop valve 24, and the flow control valve 25 are arranged for each use side heat exchanger 26 has been described above, the configuration is not limited to this case. For example, a plurality of flow switching valves 22, a plurality of flow switching valves 23, a plurality of stop valves 24, and a plurality of flow control valves 25 may be connected to each use side heat exchanger 26. In this case, the flow switching valves 22, the flow switching valves 23, the stop valves 24, and the flow control valves 25 connected to the same use side heat exchanger 26 may be operated in the same way as described above. Although the case where the two intermediate heat exchangers 15 are arranged has been described above, any number of intermediate heat exchangers may be arranged. Three or more intermediate heat exchangers capable of cooling or/and heating the heat medium may be arranged.

Although the case where each flow control valve 25, each third temperature sensor 33, and each fourth temperature sensor 34 are arranged within the second relay unit 3b has been described above, one or all of these components may be arranged within the corresponding indoor unit 2. The arrangement of these components within the second relay unit 3b facilitates maintenance because, for example, the valves and pumps for the heat medium are accommodated in the same housing. On the other hand, the arrangement of these components within the indoor unit 2 allows the components to be manageable because the components can be dealt with like an expansion valve in a related-art direct-expansion indoor unit. In addition, since the components are arranged near the use side heat exchanger 26, a thermal load in the indoor unit 2 can be effectively controlled without being affected by heat loss in an extension pipe.

### Reference Signs List

1 heat source unit, 2 indoor unit, 2a indoor unit, 2b indoor unit, 2c indoor unit, 2d indoor unit, 3 relay unit, 3a first relay unit, 3b second relay unit, 4 refrigerant pipe, 4a first connecting pipe, 4b second connecting pipe, 5 pipe, 5a pipe, 5b pipe, 6 outdoor space, 7 living space, 9 structure, 10 compressor, 11 four-way valve, 12 heat source side heat exchanger, 13a check valve, 13b check valve, 13c check valve, 13d check valve, 14 gas-liquid separator, 15 intermediate heat exchanger, 15a first intermediate heat exchanger, 15b second intermediate heat exchanger, 16 expansion valve, 16a expansion valve, 16b expansion valve, 16c expansion valve, 16d expansion valve, 16e expansion valve, 17 accumulator, 21 pump, 21 a pump (first pump), 21 b pump (second pump), 22 flow switching valve, 22a flow switching valve, 22b flow switching valve, 22c flow switching valve, 22d flow switching valve, 23 flow switching valve, 23a flow switching valve, 23b flow switching valve, 23c flow switching valve, 23d flow switching valve, 24 stop valve, 24a stop valve, 24b stop valve, 24c stop valve, 24d stop valve, 25 flow control valve, 25a flow control valve, 25b flow control valve, 25c flow control valve, 25d flow control valve, 26 use side heat exchanger, 26a use side heat exchanger, 26b use side heat exchanger, 26c use side heat exchanger, 26d use side heat exchanger, 27 bypass, 27a bypass, 27b bypass, 27c bypass, 27d bypass, 31 first temperature sensor, 31 a first temperature sensor, 31 b first temperature sensor, 32 second temperature sensor, 32a second temperature sensor, 32b second temperature sensor, 33 third temperature sensor, 33a third temperature sensor, 33b third temperature sensor, 33c third temperature sensor, 33d third temperature sensor, 34 fourth temperature sensor, 34a fourth temperature sensor, 34b fourth temperature sensor, 34c fourth temperature sensor, 34d fourth temperature sensor, 35 fifth temperature sensor, 36 pressure sensor, 37 sixth temperature sensor, 38 seventh temperature sensor, 39 pressure sensor, 40 pressure sensor, 50 non-living space, 60 controller, 71 a discharge valve, 71 b discharge valve, 100 air-conditioning apparatus

## Claims

1. An air-conditioning apparatus comprising:
at least one intermediate heat exchanger that exchanges heat between heat source side refrigerant and a heat medium different from the heat source side refrigerant;
a refrigeration cycle including a compressor, a heat source side heat exchanger, at least one expansion valve, and a refrigerant passage of the intermediate heat exchanger connected by pipe through which the heat source side refrigerant flows; and
a heat medium circuit including a heat medium passage of the intermediate heat exchanger, a plurality of pumps, and a plurality of use side heat exchangers connected by pipe (5) through which the heat medium flows,
wherein all of the pumps are in operation for a predetermined period of time and, after that, the number of pumps (21) in operation is changed depending on an operation capacity for indoor units each including the use side heat exchanger.

2. The air-conditioning apparatus of claim 1,
wherein the air-conditioning apparatus includes a heating only operation mode for supplying only heating energy to the use side heat exchangers and a cooling only operation mode for supplying only cooling energy to the use side heat exchangers, and
wherein the number of pumps (21) in operation is changed depending on the operation capacity for the indoor units during the heating only operation mode or the cooling only operation mode.

3. The air-conditioning apparatus of claim 2, wherein when the operation capacity for the indoor units is less than or equal to a predetermined value X and all of the pumps are in operation, the number of pumps (21) in operation is changed by stopping the pump assigned a predetermined priority lower than predetermined priorities assigned to the other pumps.

4. The air-conditioning apparatus of claim 3, wherein the priority assigned to each of the pumps is determined based on an accumulated period of operating time of the pump and the number of times the pump is actuated.

5. The air-conditioning apparatus of claim 2, wherein when the operation capacity for the indoor units is greater than the predetermined value X and is greater than or equal to a value C determined based on a differential and any of the pumps is in non-operation, the number of pumps (21) in operation is changed by actuating the pump in non-operation at minimum input power.
